(19) **Europäisches Patentamt / European Patent Office / Office européen des brevets**

(11) **EP 4 383 502 A1**

(12) **EUROPEAN PATENT APPLICATION**
published in accordance with Art. 153(4) EPC

(43) Date of publication:
**12.06.2024 Bulletin 2024/24**

(21) Application number: **23825600.2**

(22) Date of filing: **26.10.2023**

(51) International Patent Classification (IPC):
$H02J\ 3/28$ (2006.01)    $H02J\ 3/38$ (2006.01)
$H02J\ 3/46$ (2006.01)    $H02J\ 3/00$ (2006.01)
$H02J\ 13/00$ (2006.01)    $G06Q\ 10/06$ (2023.01)
$G06Q\ 30/02$ (2023.01)    $G06Q\ 50/06$ (2024.01)

(86) International application number:
**PCT/CN2023/126637**

(87) International publication number:
**WO 2024/088327 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 CN 202211333948**

(71) Applicant: **State Grid Sichuan Economic Research Institute**
**Chengdu, Sichuan 610041 (CN)**

(72) Inventors:
- **XU, Weiding**
  **Chengdu, Sichuan 610041 (CN)**
- **QIAO, Yunchi**
  **Chengdu, Sichuan 610041 (CN)**

- **LI, Min**
  **Chengdu, Sichuan 610041 (CN)**
- **WANG, Ziyao**
  **Chengdu, Sichuan 610041 (CN)**
- **LIU, Yang**
  **Chengdu, Sichuan 610041 (CN)**
- **PAN, Yifan**
  **Chengdu, Sichuan 610041 (CN)**
- **LI, Ao**
  **Chengdu, Sichuan 610041 (CN)**
- **WANG, Miaomiao**
  **Chengdu, Sichuan 610041 (CN)**
- **YUAN, Bo**
  **Chengdu, Sichuan 610041 (CN)**
- **XU, Bo**
  **Chengdu, Sichuan 610041 (CN)**

(74) Representative: **Cabinet Beaumont**
**4, Place Robert Schuman**
**B.P. 1529**
**38025 Grenoble Cedex 1 (FR)**

(54) **METHOD, SYSTEM AND DEVICE FOR CONTROLLING CHARGING/DISCHARGING OF DISTRIBUTED ENERGY-STORAGE DEVICE**

(57)    Provided are a method and system for controlling charging and discharging of a distributed energy storage device, and a device. The method includes the following steps: Supply and demand resources of the distributed energy storage device, supply and demand resources of a distributed photovoltaic device, supply and demand resources of a distributed combined heat and power device, and supply and demand resources of a distributed boiler are quantified to obtain the quantitative result of supply and demand resources of distributed energy storage (S 1). The amount of idle energy storage resources submitted by an energy storage resource surplus user is acquired (S2). The price of the cloud energy storage resource on an actual operating day is pushed to a user, and the cloud energy storage resource demand submitted by the user is acquired (S3). The amount of idle energy storage resources is matched with the cloud energy storage resource demand to obtain the actual charging and discharging power of the distributed energy storage device (S4).

User layer

Cloud energy
storage platform user

· · ·

Cloud energy
storage platform user

Cloud energy
storage client

Cloud energy
storage client

Electricity sales
enterprise

Cloud energy storage
platform

Cloud
energy
storage
server

Platform
layer

Power network
in the park

Network
layer

Communication
network in the park

Device
layer

Energy
storage
device

CHP unit

· · ·

Electricity
load

Photovoltaic
device

**FIG. 1**

## Description

This application claims priority to Chinese Patent Application No. 202211333948. X filed with the China National Intellectual Property Administration (CNIPA) on Oct. 28, 2022, the disclosure of which is incorporated herein by reference in its entirety.

TECHNICAL FIELD

The present application relates to the technical field of power system operation analysis, for example, a method and system for controlling charging and discharging of a distributed energy storage device, and a device.

BACKGROUND

Under the goal of "carbon peaking and carbon neutrality" and the urgent need to build a new power system, energy storage is regarded as an important starting point and key link. Based on this, the existing large amount of distributed energy storage is aggregated to the cloud in a resource-sharing mode to form a certain virtual energy storage capacity to replace the traditional physical energy storage on the user side. A concept of cloud energy storage with the application form of "one storage, multiple fields" emerges accordingly.

SUMMARY

In one aspect, the present application provides a method for controlling charging and discharging of a distributed energy storage device. The method includes the following steps: Supply and demand resources of the distributed energy storage device, supply and demand resources of a distributed photovoltaic device, supply and demand resources of a distributed combined heat and power device, and supply and demand resources of a distributed boiler are quantified to obtain the quantitative result of supply and demand resources of distributed energy storage. The amount of idle energy storage resources submitted by an energy storage resource surplus user is acquired; the amount of idle energy storage resources is calculated by the energy storage resource surplus user with a goal of minimizing a comprehensive daily energy cost on an actual operating day and according to the quantitative result of supply and demand resources of distributed energy storage. The price of the cloud energy storage resource on the actual operating day is pushed to a user, and the cloud energy storage resource demand submitted by the user is acquired. The cloud energy storage resource demand is calculated by the user with a goal of minimizing a comprehensive daily energy cost on the actual operating day and according to the price of the cloud energy storage resource, the quantitative result of supply and demand resources of distributed energy storage, and demand of the user. The amount of idle energy storage resources is matched with the cloud energy storage resource demand to obtain the actual charging and discharging power of the distributed energy storage device.

In another aspect, the present application provides a system for controlling charging and discharging of a distributed energy storage device. The system includes a supply and demand resource quantization module, an idle energy storage resource amount acquisition module, an information pushing module, a cloud energy storage resource demand acquisition module, and a matching module. The supply and demand resource quantization module is configured to quantize supply and demand resources of the distributed energy storage device, supply and demand resources of a distributed photovoltaic device, supply and demand resources of a distributed combined heat and power device, and supply and demand resources of a distributed boiler to obtain the quantitative result of supply and demand resources of distributed energy storage. The idle energy storage resource amount acquisition module is configured to acquire the amount of idle energy storage resources submitted by an energy storage resource surplus user; the amount of idle energy storage resources is calculated by the energy storage resource surplus user with a goal of minimizing a comprehensive daily energy cost on an actual operating day and according to the quantitative result of supply and demand resources of distributed energy storage. The information pushing module is configured to push the price of the cloud energy storage resource on the actual operating day to a user. The cloud energy storage resource demand acquisition module is configured to acquire the cloud energy storage resource demand submitted by the user; the cloud energy storage resource demand is calculated by the user with a goal of minimizing a comprehensive daily energy cost on the actual operating day and according to the price of the cloud energy storage resource, the quantitative result of supply and demand resources of distributed energy storage, and demand of the user. The matching module is configured to match the amount of idle energy storage resources with the cloud energy storage resource demand to obtain the actual charging and discharging power of the distributed energy storage device.

In another aspect, the present application provides an electronic device. The device includes at least one processor and a memory.

The memory is configured to store at least one program.

The at least one program, when executed by the at least one processor, causes the at least one processor to perform the preceding method for controlling charging and discharging of the distributed energy storage device.

In another aspect, the present application provides a computer-readable storage medium, which is configured to store computer programs that, when executed by a processor, perform the preceding method for controlling charging and discharging of the distributed energy storage device.

BRIEF DESCRIPTION OF DRAWINGS

The accompanying drawings used in the description of the embodiments will be briefly described below. It is to be understood that the subsequent accompanying drawings merely illustrate part of embodiments of the present application and thus are not to be construed as limiting the present application, and those of ordinary skill in the art may obtain other accompanying drawings on the basis of these accompanying drawings on the premise that no creative work is done.

FIG. 1 is a diagram illustrating the structure of a cloud energy storage park according to embodiment two of the present application.

FIG. 2 is a diagram of 24-hour time-of-use electricity prices for general industrial and commercial users according to embodiment two of the present application.

FIG. 3 is a diagram of an expected charging and discharging strategy before the application of a cloud energy storage mode according to embodiment two of the present application.

FIG. 4 is a diagram of an expected charging and discharging strategy after the application of a cloud energy storage mode according to embodiment two of the present application.

FIG. 5 is a flowchart of a method for controlling charging and discharging of a distributed energy storage device according to an embodiment of the present application.

FIG. 6 is a diagram illustrating the structure of an electronic device according to an embodiment of the present application.

DETAILED DESCRIPTION

The distributed energy storage technology is mature, but the lack of cooperation between a specific operation mode and distributed single energy storage devices restricts the development of the energy storage market. The restriction is embodied in the following aspects: The economics of using distributed energy storage on the user side are not encouraging, the cloud energy storage service solution is imperfect, and the optimization and control mode of distributed energy storage in the power grid operation is single.

In view of the preceding situation, embodiments of the present application provide a method, system, device, and storage medium for controlling charging and discharging of a distributed energy storage device.

The present application is described in further detail below in connection with embodiments and drawings, and the illustrative embodiments of the present application and description thereof are for the purpose of explaining the present application only and are not intended to limit the present application.

Embodiment one

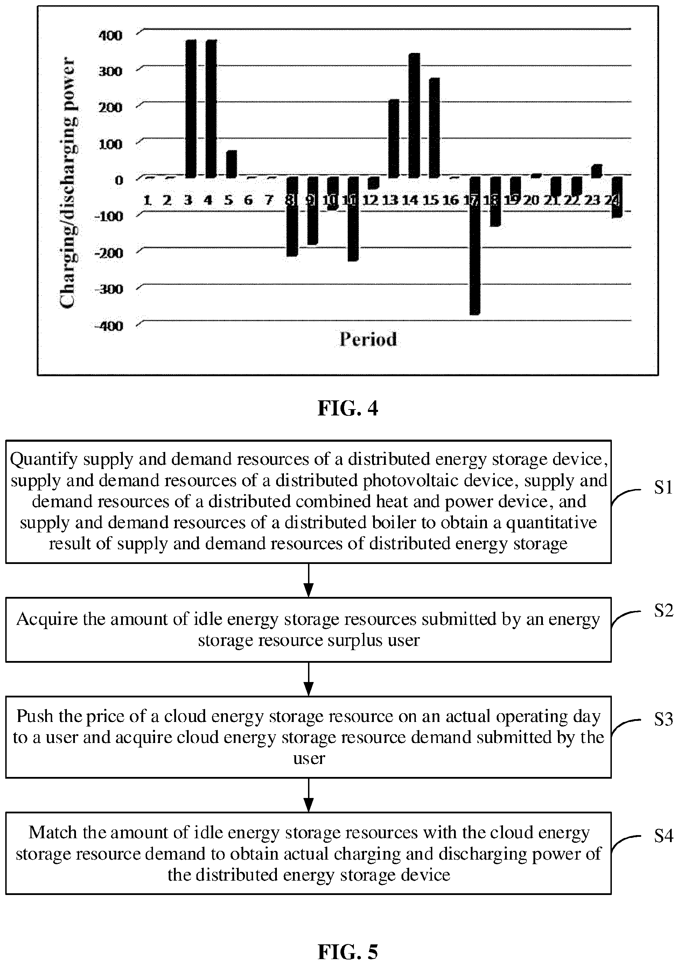

Since conventional distributed energy storage technology is not conducive to improving the comprehensive utilization rate of energy storage and the capacity to consume and accommodate new energy, with reference to FIG. 5, this embodiment provides a method for controlling charging and discharging of a distributed energy storage device. The method includes the steps described below.

In S 1, supply and demand resources of the distributed energy storage device, supply and demand resources of a distributed photovoltaic device, supply and demand resources of a distributed combined heat and power device, and supply and demand resources of a distributed boiler are quantified to obtain the quantitative result of supply and demand resources of distributed energy storage.

For example, S1 includes the steps described below.

In S11, a physical model of the distributed energy storage device, a physical model of the distributed photovoltaic device, a physical model of the distributed combined heat and power device, and a physical model of the distributed boiler are established.

In S12, the supply and demand resources of the distributed energy storage device are quantified by using the physical model of the distributed energy storage device, the supply and demand resources of the distributed photovoltaic device are quantified by using the physical model of the distributed photovoltaic device, the supply and demand resources of the distributed combined heat and power device are quantified by using the physical model of the distributed combined heat and power device, and the supply and demand resources of the distributed boiler are quantified by using the physical model of the distributed boiler.

(1) The distributed energy storage device may store/release electric energy during operation so that a user can perform operations such as clean energy consumption and accommodation, translation of power consumption curves, and optimization of power generation plans of multi-energy coupling devices. For the d-th ($1 \leq d \leq n + m$) user in a set D composed of all users on the platform, the physical model of the user d's distributed energy storage device may be expressed as follows:

$$0 \leq P_t^{d.CH} \leq X_t^{d.ST} P_{max}^{d.SG},$$

$$0 \leq P_t^{d.DCH} \leq \left(1 - X_t^{d.ST}\right) P_{max}^{d.SG},$$

$$\eta^{ST} \Sigma_{t=1}^{T=24} P_t^{d.CH} \Delta t - \frac{1}{\eta^{ST}} \Sigma_{t=1}^{T=24} P_t^{d.DCH} \Delta t = 0,$$

and

$$0.1 E_{max}^{d.SG} \leq 0.1 E_{max}^{d.SG} + \eta^{ST} \Sigma_{t'=1}^{t} P_{t'}^{d.CH} \Delta t - \eta^{ST} \Sigma_{t'=1}^{t} P_{t'}^{d.DCH} \Delta t \leq 0.9 E_{max}^{d.SG}.$$

$P_{max}^{d,SG}$ is the maximum charging/discharging power of the distributed energy storage device $pd,CH$ $pd,DCH$ of a user d. $P_t^{d,CH}$ and $P_t^{d,DCH}$ are the charging power and discharging power of the distributed energy storage device of the user d in a period of time t, respectively. $\eta^{ST}$ is the charging/discharging efficiency of the distributed energy storage device. $X_t^{d,ST}$ is a 0-1 variable, which represents a charging and discharging state of energy storage. $X_t^{d,ST}$ is 1, indicating charging, and $X_t^{d,ST}$ is 0, indicating discharging. $E_{max}^{d,SG}$ is the maximum storage capacity of the distributed energy storage device of the user d.

(2) The output power of the distributed photovoltaic device is related to factors such as the intensity of light radiation and the angle of light incidence. For the d-th ($1 \leq d \leq n + m$) user in the set D, the physical model of the photovoltaic device may generally be expressed as follows:

$$P_{t.max}^{d.PV} = \zeta_t^d P_{max}^{d.PV},$$

and

$$0 \leq P_t^{d.PV} \leq P_{t.max}^{d.PV}.$$

$P_{t,max}^{d.PV}$ represents the maximum output of the distributed photovoltaic device of a user d in a period of time t. $\zeta_t^d$ is the power ratio of the photovoltaic device in the period of time t, which is related to factors such as the intensity of light radiation, the angle of light incidence, and the efficiency of a solar panel. $P_{max}^{d.PV}$ is the installed capacity of the photovoltaic device of the user d. $P_t^{d.PV}$ represents the output of the photovoltaic device of the user d in the period of time t.

(3) The distributed combined heat and power (CHP) device can meet the heat needs of a user while outputting electrical power. For the d-th ($1 \leq d \leq n + m$) user in the set D, the physical model of of a user d's distributed combined heat and power device may be represented by the following formulas:

$$P_t^{d.CHP} = F_t^{d.CHP} \eta^{CHP.e} q,$$

$$H_{t.max}^{d.CHP} = \frac{(1-\eta^{CHP.e}-\eta^{CHP.l})\delta}{\eta^{CHP.e}} P_t^{d.CHP} = k^{CHP} P_t^{d.CHP},$$

$$0 \leq P_t^{d.CHP} \leq P_{max}^{d.CHP},$$

and

$$0 \leq H_t^{d.CHP} \leq H_{t.max}^{d.CHP}.$$

$P_t^{d.CHP}$ represents the electrical output power of the distributed CHP device of a user d in a period of time t. $F_t^{d.CHP}$ is the power of the distributed CHP device consuming natural gas in the period of time t. $\eta^{CHP.e}$ is the power generation efficiency of the distributed CHP device. q is the calorific value of natural gas. $H_{t.max}^{d.CHP}$ represents the maximum heat output power of the distributed CHP device in the period of time t. $\eta^{CHP.l}$ is the heat dissipation loss coefficient of the distributed CHP device. $\delta$ is the heating coefficient of the distributed CHP device. When $\eta^{CHP.e}$ and $\eta^{CHP.l}$ are approximately considered to be constant, the ratio of electrical output power of a distributed CHP unit to the thermal output power of the distributed CHP unit is a fixed value and represented by $k^{CHP}$.

(4) A distributed electric boiler can convert electrical energy into heat energy. For the d-th ($1 \leq d \leq n + m$) user in the set D, the physical model of the user d's distributed electric boiler may be expressed as follows:

$$H_t^{d.EB} = P_t^{d.EB} \eta^{EB},$$

and

$$0 \leq P_t^{d.EB} \leq P_{max}^{d.EB}.$$

$H_t^{d.EB}$ is the thermal power output by the distributed electric boiler of a user d. $P_t^{d.EB}$ is the electric power input by the electric boiler. $\eta^{EB}$ is the conversion coefficient of the electric boiler.

In S2, the amount of idle energy storage resources submitted by an energy storage resource surplus user is acquired. The amount of idle energy storage resources is calculated by the energy storage resource surplus user with a goal of minimizing a comprehensive daily energy cost on an actual operating day and according to the quantitative result of supply and demand resources of distributed energy storage.

In an idle energy storage submission stage, an energy storage resource surplus user may submit the idle energy storage resources on the operating day to a cloud energy storage platform, and the cloud energy storage platform is responsible for matching the idle energy storage resource with the cloud energy storage resource demand in the market.

The model expression of the minimum comprehensive daily energy cost of the energy storage resource surplus user is as follows:

(1) Objective function

One day before an actual operating day, the energy storage resource surplus user needs to consider the cooperation between energy storage and other distributed devices according to situations such as the electricity and heat load of the next day and determine the amount of idle storage energy to be submitted to the platform with the goal of minimizing the comprehensive daily energy cost. For the i-th user in a set I composed of all energy storage resource surplus users, the objective function of the user i may be expressed as follows:

$$\min C^{i.DR} + C^{i.G} + C^{i.M} - C^{i.IL}.$$

In the formula, $C^{i.DR}$ is the electricity purchase cost of the energy storage resource surplus user i; $C^{i.G}$ is the gas purchase cost of the energy storage resource surplus user i; $C^{i.M}$ is the device maintenance cost of the energy storage resource surplus user i; $C^{i.IL}$ is the revenue that the energy storage resource surplus user i may receive after submitting the idle energy storage resources. The device maintenance cost is ignored herein.

In the objective function expression,

$$C^{i.DR} = \Sigma_{t=1}^{T=24} P_t^{i.DR} \lambda_t \Delta t,$$

$$C^{i.G} = \Sigma_{t=1}^{T=24} F_t^{i.CHP} \lambda_t^F \Delta t,$$

and

$$C^{i.IL} = k * Price^{i.E} E^{i.YIL} + k * Price^{i.P} P^{i.YIL}.$$

In the formula, $P_t^{i.DR}$ is the power of electricity purchased by the user i in a period of time t, which is greater than or equal to 0; $\lambda_t^F$ is the natural gas price in the period of time t; k is a coefficient of the acquisition price of the cloud energy storage resource; Price$^{i.E}$ and Price$^{i.P}$ are estimated values of the price of the cloud energy storage resource by the user i;

$E^{i.YIL}$ and $P^{i.YIL}$ are the amount of idle energy storage resources to be submitted to a cloud energy storage platform by the user i.

(2) Constraints

$$0 \leq P_t^{i.CH} \leq X_t^{i.ST}\left(P_{max}^{i.SG} - P^{i.YIL}\right),$$

$$0 \leq P_t^{i.DCH} \leq \left(1 - X_t^{i.ST}\right)\left(P_{max}^{i.SG} - P^{i.YIL}\right),$$

$$\eta^{ST}\Sigma_{t=1}^{T=24} P_t^{i.CH} \Delta t - \frac{1}{\eta^{ST}}\Sigma_{t=1}^{T=24} P_t^{i.DCH} \Delta t = 0,$$

$$0.1 E_{max}^{i.SG} \leq 0.1 E_{max}^{i.SG} + \eta^{ST}\Sigma_{t'=1}^{t} P_{t'}^{i.CH} \Delta t - \frac{1}{\eta^{ST}}\Sigma_{t'=1}^{t} P_{t'}^{i.DCH} \Delta t \leq 0.9 E_{max}^{i.SG} - E^{i.YIL},$$

$$P_t^{i.load} + P_t^{i.CH} + P_t^{i.EB} = P_t^{i.DCH} + P_t^{i.PV} + P_t^{i.CHP} + P_t^{i.DR},$$

and

$$H_t^{i.load} = H_t^{i.CHP} + H_t^{i.EB}.$$

(3) Model of the amount of idle energy storage resources

According to the preceding optimization model, the amount $P^{i.YIL}*$ and $E^{i.YIL}*$ of idle energy storage resources submitted to the platform by the energy storage resource surplus user i can be obtained, and the idle energy storage resources $P^{i.IL}$ and $E^{i.IL}$ submitted to the cloud energy storage platform by the user i may be expressed as follows:

$$\begin{cases} P^{i.IL} = P^{i.YIL*} \\ E^{i.IL} = E^{i.YIL*} \end{cases}$$

The user controls the output $P_t^{j.YCH*}$ and $P_t^{j.YDCH*}$ of each distributed device according to the preceding optimal energy utilization strategy on the actual operating day, and the requests of charging and discharging, that is, $P_t^{j-PF.CH}$ and $P_t^{j-PF.DCH}$ submitted by the user to the cloud energy storage platform are as follows:

$$\begin{cases} P_t^{j-PF.CH} = P_t^{j.YCH*} \\ P_t^{j-PF.DCH} = P_t^{j.YDCH*} \end{cases}$$

In S3, the price of the cloud energy storage resource on an actual operating day is pushed to a user, and the cloud energy storage resource demand submitted by the user is acquired. The cloud energy storage resource demand is calculated by the user with a goal of minimizing a comprehensive daily energy cost on an actual operating day and according to the price of the cloud energy storage resource, the quantitative result of supply and demand resources of distributed energy storage, and demand of the user.

In the cloud energy storage demand submission stage, the cloud energy storage platform needs to first push the price of the cloud energy storage resource to a user, and the energy storage resource demand user can submit the cloud energy storage resource demand to the cloud energy storage platform according to the price of the cloud energy storage resource and the demand of the user (for example, completion of clean energy consumption and accommodation, and translation of power consumption curves).

The model expression of the minimum comprehensive daily energy cost of an energy storage resource demand user is as follows:

(1) Objective function

One day before an actual operating day, the energy storage resource demand user determines the cloud energy storage resource demand according to situations such as the electricity and heat load of the next day and the price of the cloud energy storage resource. The demand decision of the energy storage resource demand user is aimed at minimizing the daily comprehensive energy cost. For the j -th user in a set J composed of all energy storage resource demand users on the platform, a user j's objective function can be expressed as follows:

$$\min C^{j.DR} + C^{j.G} + C^{j.M} + C^{j.ST}.$$

In the formula, $C^{j.DR}$ is the electricity purchase cost of an energy storage resource demand user j; $C^{j.G}$ is the gas purchase cost of the energy storage resource demand user j; $C^{j.M}$ is the device maintenance cost of the energy storage resource demand user j; $C^{j.IL}$ is the revenue that the energy storage resource demand user j may receive after submitting the idle energy storage resource. The device maintenance cost is ignored herein.

In the objective function expression,

$$C^{j.DR} = \Sigma_{t=1}^{T=24} P_t^{j.DR} \lambda_t \Delta t,$$

$$C^{j.G} = \Sigma_{t=1}^{T=24} F_t^{j.CHP} \lambda_t^F \Delta t,$$

and

$$C^{j.ST} = k * Price^E E^{j.YDM} + k * Price^P P^{j.YDM}.$$

(2) Constraints

$$0 \leq P_t^{j.YCH} \leq X_t^{j.YST} P^{j.YDM},$$

and

$$0 \leq P_t^{j.YDCH} \leq \left(1 - X_t^{j.YST}\right) P^{j.YDM}.$$

In the formulas, assuming $X_t^{j.YST} P^{j.YDM} = P_t^{j.equ}$,

$$0 \leq P_t^{j.eqt} \leq X_t^{j.YST} \overline{P}^{j.YDM},$$

and

$$P^{j.YDM} - \overline{P}^{j.YDM}\left(1 - X_t^{j.YST}\right) \leq P_t^{j.eqt} \leq P^{j.YDM}.$$

Additionally, constraints also include the following:

$$\eta^{ST} \Sigma_{t=1}^{T=24} P_t^{j.YCH} \Delta t - \frac{1}{\eta^{ST}} \Sigma_{t=1}^{T=24} P_t^{j.YDCH} \Delta t = 0,$$

$$0 \leq \eta^{ST} \Sigma_{t'=1}^{t} P_{t'}^{j.YCH} \Delta t - \frac{1}{\eta^{ST}} \Sigma_{t'=1}^{t} P_{t'}^{j.YDCH} \Delta t \leq E^{j.YDM},$$

$$P_t^{j.load} + P_t^{j.CH} + P_t^{j.YCH} + P_t^{j.EB} = P_t^{j.DCH} + P_t^{j.YDCH} + P_t^{j.PV} + P_t^{j.CHP} + P_t^{j.DR},$$

and

$$H_t^{j.load} = H_t^{j.CHP} + H_t^{j.EB}.$$

$P_t^{j.DR}$ is the power of electricity purchased by the user j in a period of time t, which is greater than or equal to 0. $\lambda_t^F$ is the natural gas price in the period of time t. k is a coefficient of the acquisition price of the cloud energy storage

resource. P$\text{rice}^{j.E}$ and P$\text{rice}^{j.P}$ are estimated values of the price of the cloud energy storage resource by the user j. $E^{j.YIL}$ and $P^{j.YIL}$ are the amount of idle energy storage resources to be submitted to a cloud energy storage platform by the user j.

According to the preceding optimization model, the optimal cloud energy storage resource demand decisions $E^{j.YDM*}$ and $P^{j.YDM*}$ of the energy storage resource demand user j can be obtained, and the cloud energy storage resource demand $E^{j.DM}$ and $P^{j.DM}$ submitted by the energy storage resource demand user j to the cloud energy storage

$$\begin{cases} P^{j.DM} = P^{j.YDM*} \\ E^{j.DM} = E^{j.YDM*} \end{cases}$$

platform may be expressed as follows: .

In S4, the amount of idle energy storage resources is matched with the cloud energy storage resource demand to obtain the actual charging and discharging power of the distributed energy storage device.

The user controls the output of each distributed device according to the preceding optimal energy utilization strategy on the operating day. However, it should be noted that after the idle energy storage resource of the energy storage resource surplus user is acquired by the cloud energy storage platform, the cloud energy storage platform has the right to control this part of the idle energy storage resource on the actual operating day. When the cloud energy storage platform sends a control command to this part of the energy storage resource, the energy storage resource surplus user needs to execute the command. Therefore, for a certain period of time t of the actual operating day, the actual charging/discharging power of the energy storage device of the energy storage resource surplus user may be expressed as follows:

$$P_t^{i.CH'} = \left( P_t^{i.CH*} - P_t^{i.DCH*} + P_t^{PF-i.CH} - P_t^{PF-i.DCH} \right)^+,$$

and

$$P_t^{i.DCH'} = \left( P_t^{i.CH*} - P_t^{i.DCH*} + P_t^{PF-i.CH} - P_t^{PF-i.DCH} \right)^-.$$

$P_t^{i.CH*}$ and $P_t^{i.DCH*}$ are an optimal charging strategy of an energy storage resource surplus user i and an optimal discharging strategy of the energy storage resource surplus user i, respectively. Operation of $(\cdot)^+$ and $(\cdot)^-$ are expressed as follows:

$$\begin{cases} (x)^+ = \begin{cases} x, x \geq 0 \\ 0. x < 0 \end{cases} \\ (x)^- = \begin{cases} -x, x \leq 0 \\ 0. x > 0 \end{cases} \end{cases}$$

In summary, this embodiment provides a method for controlling charging and discharging of a distributed energy storage device. First, a detailed analysis of the behavior of the energy storage resource surplus users and demand users in a cloud energy storage business model is performed on the basis of an operation model of the distributed energy storage device concerning energy storage resource surplus users and demand users in the park. Then in the real-time control stage, the users' surplus/demand decision model and the energy utilization strategy model are established to optimize the charging and discharging of the energy storage device. In this manner, the energy utilization efficiency of the park is improved.

Embodiment two

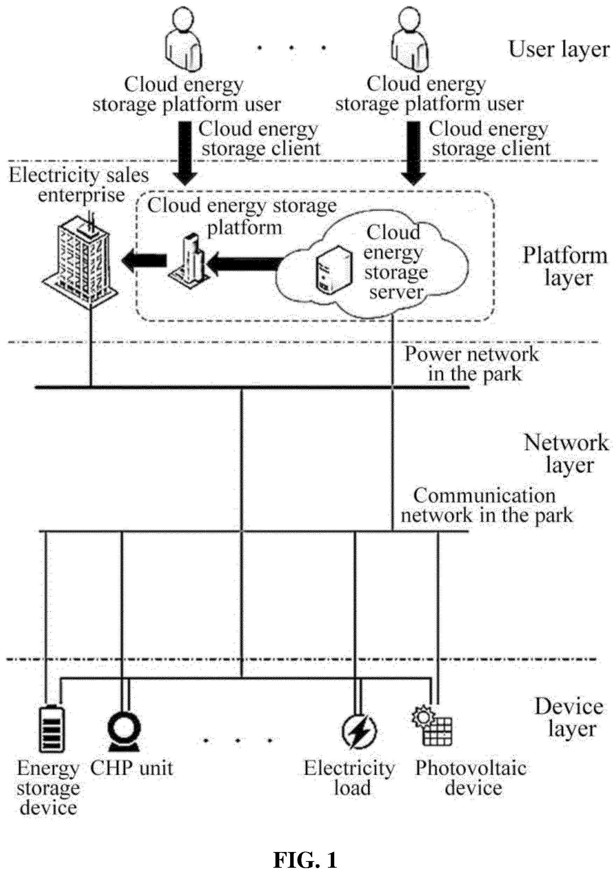

To illustrate the effectiveness of the preceding method, this embodiment selects six enterprise users ($I_1$ - $I_6$) in an integrated energy park A and configures appropriate installed capacity of a distributed photovoltaic device, a distributed CHP unit, a distributed electric boiler, and a distributed energy storage device in combination with the local photovoltaic installable area and demands for electricity and heat; then this embodiment simulates the cloud energy storage operation model using the six enterprises as users of the cloud energy storage platform to verify the rationality and feasibility of the cloud energy storage business model and the operation model. The structure of the integrated energy park A is shown in FIG. 1, and the parameter information of the devices in the integrated energy park A is shown in Table 1.

Table 1

| Device | Parameter | Value and Unit |
|---|---|---|
| Distributed CHP Unit | Power generation efficiency $\eta^{CHP.e}$ | 0.4 |
| | calorific value q of natural gas | 9.7 $kwh / m^3$ |
| | ratio of heat to power $k^{CHP}$ | 1.2 |
| Distributed Electric Boiler | conversion coefficient $\eta^{EB}$ | 0.95 |
| Distributed energy Storage Device | charging/discharging efficiency $\eta^{ST}$ | 0.95 |

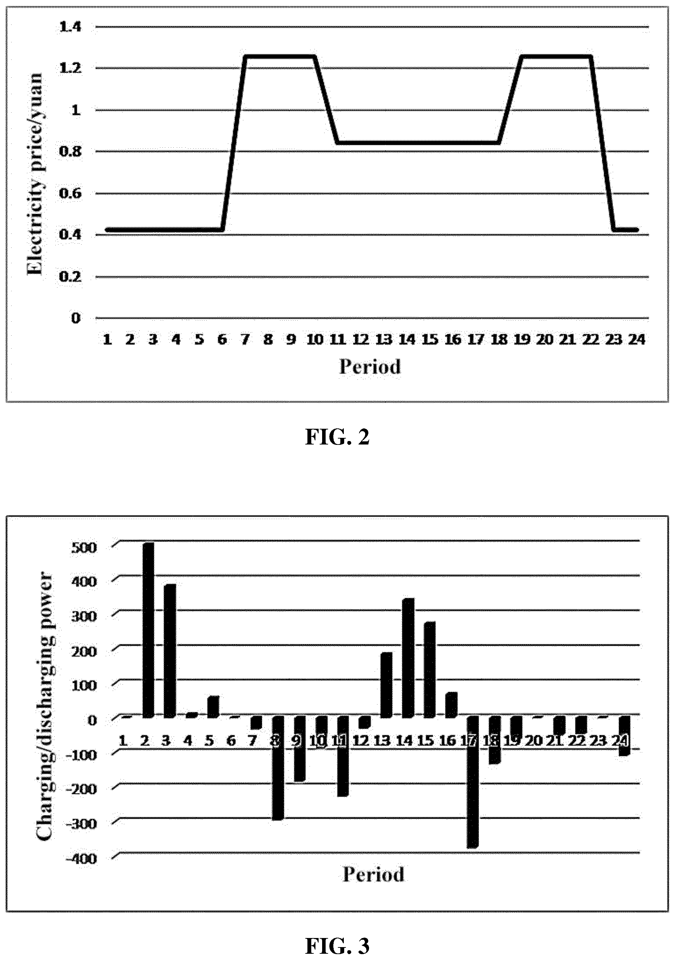

User $I_1$, a group of office buildings, belongs to general industrial and commercial users. User $I_2$, a processing and manufacturing industry, belongs to general industrial and commercial users. User $I_3$, a hotel, belongs to general industrial and commercial users. User $I_4$, a textile and chemical fiber industry, belongs to large industrial users. User $I_5$, a cement manufacturing industry, belongs to large industrial users. User $I_6$, a steel manufacturing industry, belongs to large industrial users. For non-resident electricity consumption and domestic electricity consumption for users $I_3$ - $I_6$, since the users are engaged in a production industry and are financial, this part of the power consumption is calculated according to general industrial and commercial power consumption. Therefore, the electricity price for users $I_1$ - $I_6$ (the load of users $I_3$ - $I_6$ refers to the non-resident load and the life load) in this embodiment is calculated according to the electricity price of the general industrial and commercial users. The 24-hour time-of-use electricity price is shown in FIG. 2.

Additionally, other residential electricity loads exist in the vicinity of the park, and other electricity load curves in the area are not limited. The on-grid electricity price of coal power plants is $\lambda_{np}$ = 0.4012 yuan. The average unit capacity cost of power transmission and transformation devices is $\lambda_{inv}$ = 4500 yuan/kw. The equalization period of time is Y' = 10 years.

According to the cloud energy storage operation model, the user needs to determine the amount of idle energy storage resources to be submitted to the cloud energy storage platform according to situations such as electricity and heat load of the next day in the idle energy storage submission stage. The electricity and heat load of users $I_1$ - $I_6$ is not limited. The power ratio $\zeta_t^d$ of the photovoltaic device is not limited. The estimated value of the price of the cloud energy storage resource by the user i is made to be the minimum value of the cloud energy storage resource price, and the purchase price coefficient k = 0.8. According to the decision model of the amount of idle energy storage resources, the amount of idle energy storage resources submitted by each user to the cloud energy storage platform can be obtained, as shown in Table 2 below.

Table 2

| User | $I_1$ | $I_2$ | $I_3$ | $I_4$ | $I_5$ | $I_6$ |
|---|---|---|---|---|---|---|
| Storage Capacity $E^{IL}$ (kW/h) | 417 | 0 | 779 | 0 | 785 | 0 |
| Power capacity $P^{IL}$ (kW) | 123 | 0 | 478 | 0 | 202 | 0 |

As can be seen from Table 2, users $I_1$, $I_3$, and $I_5$ submit surplus energy storage resources to the cloud energy storage platform, and they are energy storage resource surplus users, while the amount of idle energy storage resources submitted by users $I_2$, $I_4$, and $I_4$ is zero. User $I_1$ is used as an example in this embodiment to conduct a detailed analysis of the submission strategy of user $I_1$'s idle energy storage resources. Table 3 compares the expected energy consumption cost of user $I_1$ before and after the application of the cloud energy storage mode. In terms of the total amount, the expected energy consumption cost of user $I_1$ after the application of the cloud energy storage mode is reduced by 129.81 yuan; this part of the reduced cost consists of changes in the expected electricity purchase cost, the expected natural gas purchase cost, and the expected energy storage resource sales revenue. After the application of the cloud energy storage mode, the expected natural gas purchase cost of user $I_1$ increases by 64 yuan, but the expected electricity purchase cost decreases by about 53 yuan, and an additional expected energy storage resource sales revenue of about 140 yuan is added. That is, after the cloud energy storage mode is applied, the change of user $I_1$'s energy utilization strategy causes an increase in the sum of the expected electricity purchase cost and gas purchase cost, but due to the surplus amount of the energy storage resources, the revenue corresponding to the surplus amount offsets the increase of the energy purchase cost, and finally the expected total energy consumption cost under the cloud energy storage mode is reduced. The comparison of the expected energy consumption cost of user $I_1$ before and after the application of the cloud energy storage mode is shown in Table 3.

Table 3

|  | Before Application | After Application | Difference |
| --- | --- | --- | --- |
| Expected Electricity Purchase Cost | 476.7 | 423.3 | -53.4 |
| Expected Natural Gas Purchase Cost | 10707 | 10771 | 64 |
| Expected Sales Revenue from Energy Storage Resources | 0 | 140.1 | 140.1 |
| Expected Total Cost | 11183 | 11053 | -130 |

FIG. 3 shows the expected charging/discharging strategy of user $I_1$'s energy storage before the cloud energy storage mode is applied. When the power is greater than 0, it indicates that the energy storage device is in the charging state; when the power is less than 0, it indicates that the energy storage device is in the discharging state. The charging periods of the user are periods 2, 3, 4, 5, 13, 14, 15, and 16. The charging power of the user in period 2 reaches the maximum value of 500 kW. The discharging periods of the user are periods 7, 8, 9, 10, 11, 12, 17, 18, 19, 21, 22, 23, and 24. The discharging power of the energy storage device in period 17 reaches the maximum value of 376 kW. FIG. 4 shows an expected charging/discharging strategy of the user's energy storage device after a cloud energy storage mode is applied. The charging periods are periods 3, 4, 5, 13, 14, 15, and 23. The charging power of the energy storage device in periods 3 and 4 reaches the maximum value of 376 kW. The discharging periods are periods 8, 9, 10, 11, 17, 18, 19, 21, 22, and 24. The discharging power of the energy storage device reaches the maximum value of 376 kW.

In comparison with FIGS. 3 and 4, it can be seen that after the introduction of the cloud energy storage mode, the time of the charging peak value of the energy storage device is shifted from the original period 2 to periods 3 and 4, and the charging peak value is also reduced from 500 kW to 376 kW. Since the discharging peak value does not change, user $I_1$ has an idle power capacity of 123 kW. Additionally, when the cloud energy storage mode is introduced, the maximum amount of power stored by user $I_1$'s energy storage device is also reduced, thereby providing an idle storage capacity of 417 kWh.

In conclusion, after the cloud energy storage mode is introduced, the user may change the expected energy utilization strategy to reduce the charging/discharging power peak value and the power storage peak of the energy storage device in consideration of the energy consumption cost and finally submit the idle energy storage resource to the cloud energy storage platform to reduce the expected energy consumption cost of the user.

Embodiment three

Corresponding to embodiment one, this embodiment provides a system for controlling charging and discharging of a distributed energy storage device. The system includes a supply and demand resource quantization module, an idle energy storage resource amount acquisition module, an information pushing module, a cloud energy storage resource demand acquisition module, and a matching module.

The supply and demand resource quantization module is configured to quantize supply and demand resources of the distributed energy storage device, supply and demand resources of a distributed photovoltaic device, supply and demand resources of a distributed combined heat and power device, and supply and demand resources of a distributed boiler to obtain the quantitative result of supply and demand resources of distributed energy storage.

The idle energy storage resource amount acquisition module is configured to acquire the amount of idle energy storage resources submitted by an energy storage resource surplus user; the amount of idle energy storage resources is calculated by the energy storage resource surplus user with a goal of minimizing a comprehensive daily energy cost on an actual operating day and according to the quantitative result of supply and demand resources of distributed energy storage.

The information pushing module is configured to push the price of the cloud energy storage resource on an actual operating day to a user.

The cloud energy storage resource demand acquisition module is configured to acquire the cloud energy storage resource demand submitted by the user; the cloud energy storage resource demand is calculated by the user with a goal of minimizing a comprehensive daily energy cost on an actual operating day and according to the price of the cloud energy storage resource, the quantitative result of supply and demand resources of distributed energy storage, and demand of the user.

The matching module is configured to match the amount of idle energy storage resources with the cloud energy storage resource demand to obtain the actual charging and discharging power of the distributed energy storage device.

In the method and system for controlling charging and discharging of a distributed energy storage device according to the embodiments of the present application, the behavior of energy storage resource surplus users and demand users is analyzed in combination with the users' utilization of distributed energy storage devices and demand for energy storage resources, and the actual charging and discharging power of distributed energy storage devices can be controlled by the match of the amount of idle energy storage resources and the demand for cloud energy storage resources. In this manner, the charging and discharging of energy storage devices are optimized, and the comprehensive utilization rate of energy storage and the capacity to consume and accommodate new energy are improved.

Embodiment four

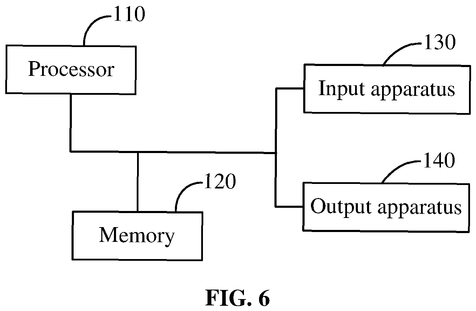

FIG. 6 is a diagram illustrating the structure of an electronic device according to an embodiment of the present application. As shown in FIG. 6, the electronic device includes one or more processors 110 and a memory 120. FIG. 6 shows one processor 110 by way of example.

The electronic device may also include an input apparatus 130 and an output apparatus 140.

It is understood that the electronic device may not include an input apparatus 130 and an output apparatus 140.

The processor 110, the memory 120, the input apparatus 130, and the output apparatus 140 in the electronic device may be connected via a bus or in other manners, with connection via a bus as an example in FIG. 6.

As a computer-readable storage medium, the memory 120 may be configured to store software programs, computer-executable programs, and modules. The processor 110 runs the software programs, instructions, and modules stored in the memory 120 to perform function applications and data processing, that is, to implement any method in the preceding embodiments.

The memory 120 may include a program storage region and a data storage region, where the program storage region may store an operating system and an application program required by at least one function while the data storage region may store data created according to use of an electronic device. In addition, the memory may include a volatile memory, such as a random access memory (RAM), and may also include a nonvolatile memory, such as at least one dick memory, a flash memory or other nonvolatile solid-state memories.

The memory 120 may be a non-transient computer storage medium or a transient computer storage medium. The non-transient computer storage medium includes, for example, at least one disk memory, a flash memory or another nonvolatile solid-state memory. In some embodiments, the memory 120 optionally includes memories which are remotely disposed relative to the processor 110, and these remote memories may be connected to the electronic device via a network. Examples of such a network may include the Internet, intranets, local area networks, mobile communication networks, and combinations thereof.

The input apparatus 130 may be configured to receive inputted digital or character information and generate key signal input related to user settings and function control of the electronic device. The output device 140 may include display devices such as a display screen.

This embodiment also provides a computer-readable storage medium, which is configured to store a computer program for executing the method described above.

The storage medium may be a non-transitory storage medium.

All or part of the procedure processes in the methods of the above-mentioned embodiments may be implemented by related hardware executed by computer programs. These programs may be stored in a non-transient computer-readable storage medium. During the execution of these programs, the processes in the preceding method embodiments may be implemented. The non-transient computer-readable storage medium may be a magnetic disk, an optical disk, a read-only memory (ROM), or an RAM.

Embodiments of the present application have the following characteristics: A distributed energy storage supply and demand resource quantification model is established in combination with users' utilization of distributed energy storage devices and demand for energy storage resources, which can efficiently and accurately obtain high-value information such as different users' electricity consumption behavior and effectively support distributed energy storage cloud services. Analyzing the energy storage utilization of users on the supply and demand side can effectively measure the supply and demand of distributed energy storage resources in the park. Meanwhile, a method for controlling the charging and discharging of an energy storage device in the park is formulated. According to the method for controlling the charging and discharging, the actual charging and discharging power of the distributed energy storage device is configured to improve the energy consumption efficiency of the park and enable coordinated operation of multiple energy sources in the park.

The preceding specific implementations further describe the purpose, technical solutions, and beneficial effects of the present application in detail. It should be understood that the above are only embodiments of the present application and are not intended to limit the scope of the present application. Any modifications, equivalent substitutions, improvements, and the like made within the spirit and principle of the present application are within the scope of the present application.

**Claims**

1. A method for controlling charging and discharging of a distributed energy storage device, comprising:

   quantifying supply and demand resources of the distributed energy storage device, supply and demand resources of a distributed photovoltaic device, supply and demand resources of a distributed combined heat and power device, and supply and demand resources of a distributed boiler to obtain a quantitative result of supply and demand resources of distributed energy storage;

   acquiring an amount of idle energy storage resources submitted by an energy storage resource surplus user, wherein the amount of idle energy storage resources is calculated by the energy storage resource surplus user with a goal of minimizing a comprehensive daily energy cost on an actual operating day and according to the quantitative result of supply and demand resources of distributed energy storage;

   pushing a price of a cloud energy storage resource on the actual operating day to a user, and acquiring cloud energy storage resource demand submitted by the user; wherein the cloud energy storage resource demand is calculated by the user with a goal of minimizing a comprehensive daily energy cost on the actual operating day and according to the price of the cloud energy storage resource, the quantitative result of supply and demand resources of distributed energy storage, and demand of the user; and

   matching the amount of idle energy storage resources with the cloud energy storage resource demand to obtain actual charging and discharging power of the distributed energy storage device.

2. The method for controlling charging and discharging of the distributed energy storage device according to claim 1, wherein quantifying the supply and demand resources of the distributed energy storage device, the supply and demand resources of the distributed photovoltaic device, the supply and demand resources of the distributed combined heat and power device, and the supply and demand resources of the distributed boiler to obtain the quantitative result of supply and demand resources of distributed energy storage comprises:

   establishing a physical model of the distributed energy storage device, a physical model of the distributed photovoltaic device, a physical model of the distributed combined heat and power device, and a physical model of the distributed boiler; and

   quantifying the supply and demand resources of the distributed energy storage device by using the physical model of the distributed energy storage device, quantifying the supply and demand resources of the distributed photovoltaic device by using the physical model of the distributed photovoltaic device, quantifying the supply and demand resources of the distributed combined heat and power device by using the physical model of the distributed combined heat and power device, and quantifying the supply and demand resources of the distributed boiler by using the physical model of the distributed boiler.

3. The method for controlling charging and discharging of the distributed energy storage device according to claim 2, wherein the physical model of the distributed energy storage device is expressed as follows:

$$0 \leq P_t^{d.CH} \leq X_t^{d.ST} P_{max}^{d.SG},$$

$$0 \leq P_t^{d.DCH} \leq \left(1 - X_t^{d.ST}\right) P_{max}^{d.SG},$$

$$\eta^{ST} \Sigma_{t=1}^{T=24} P_t^{d.CH} \Delta t - \frac{1}{\eta^{ST}} \Sigma_{t=1}^{T=24} P_t^{d.DCH} \Delta t = 0,$$

and

$$0.1 E_{max}^{d.SG} \leq 0.1 E_{max}^{d.SG} + \eta^{ST} \Sigma_{t'=1}^{t} P_{t'}^{d.CH} \Delta t - \eta^{ST} \Sigma_{t'=1}^{t} P_{t'}^{d.DCH} \Delta t \leq 0.9 E_{max}^{d.SG},$$

wherein $P_{max}^{d,SG}$ is maximum charging/discharging power of a distributed energy storage device of a user d; $P_t^{d,CH}$ and $P_t^{d,DCH}$ are charging power and discharging power of the distributed energy storage device of the user d in a period of time t, respectively; $\eta^{ST}$ is charging/discharging efficiency of the distributed energy storage device; $X_t^{d,ST}$ is a 0-1 variable, which represents a charging and discharging state of energy storage; $X_t^{d,ST}$ is 1, indicating charging, and $X_t^{d,ST}$ is 0, indicating discharging; and $E_{max}^{d,SG}$ is maximum storage capacity of the distributed energy storage device of the user d.

4. The method for controlling charging and discharging of the distributed energy storage device according to claim 2, wherein the physical model of the distributed photovoltaic device is expressed as follows:

$$P_{t.max}^{d.PV} = \zeta_t^d P_{max}^{d.PV},$$

and

$$0 \leq P_t^{d.PV} \leq P_{t.max}^{d.PV};$$

wherein $P_{t,max}^{d.PV}$ represents maximum output of a distributed photovoltaic device of a user d in a period of time t; $\zeta_t^d$ is a power ratio of the photovoltaic device in the period of time t, which is related to an intensity of light radiation, an angle of light incidence, and an efficiency of a solar panel; $P_{max}^{d.PV}$ is installed capacity of the photovoltaic device of the user d; and $P_t^{d.PV}$ represents output of the photovoltaic device of the user d in the period of time t.

5. The method for controlling charging and discharging of the distributed energy storage device according to claim 2, wherein the physical model of the distributed combined heat and power device is expressed as follows:

$$P_t^{d.CHP} = F_t^{d.CHP} \eta^{CHP.e} q,$$

$$H_{t.max}^{d.CHP} = \frac{(1 - \eta^{CHP.e} - \eta^{CHP.l})\delta}{\eta^{CHP.e}} P_t^{d.CHP} = k^{CHP} P_t^{d.CHP},$$

$$0 \leq P_t^{d.CHP} \leq P_{max}^{d.CHP},$$

and

$$0 \leq H_t^{d.CHP} \leq H_{t.max}^{d.CHP};$$

wherein $P_t^{d.CHP}$ represents electrical output power of a distributed combined heat and power, CHP, device of a user d in a period of time t; $F_t^{d.CHP}$ is power of the distributed CHP device consuming natural gas in the period of time t; $\eta^{CHP.e}$ is power generation efficiency of the distributed CHP device; q is a calorific value of natural gas; $H_{t.max}^{d.CHP}$ represents maximum heat output power of the distributed CHP device in the period of time t; $\eta^{CHP.l}$ is a heat dissipation loss coefficient of the distributed CHP device; $\delta$ is a heating coefficient of the distributed CHP device; and in a case where $\eta^{CHP.e}$ and $\eta^{CHP.l}$ are approximately considered to be constant, a ratio of electrical output power of a distributed CHP unit to thermal output power of the distributed CHP unit is a fixed value and represented by $k^{CHP}$.

6. The method for controlling charging and discharging of the distributed energy storage device according to claim 2, wherein the physical model of the distributed boiler is expressed as follows:

$$H_t^{d.EB} = P_t^{d.EB}\eta^{EB},$$

and

$$0 \le P_t^{d.EB} \le P_{max}^{d.EB};$$

wherein $H_t^{d.EB}$ is thermal power that is output by a distributed electric boiler of a user d; $P_t^{d.EB}$ is electric power that is input by the electric boiler; $\eta^{EB}$ is a conversion coefficient of the electric boiler.

7. The method for controlling charging and discharging of the distributed energy storage device according to claim 1, wherein

a model expression of the minimum comprehensive daily energy cost of the energy storage resource surplus user is as follows:

$$\min C^{i.DR} + C^{i.G} + C^{i.M} - C^{i.IL},$$

$$C^{i.DR} = \Sigma_{t=1}^{T=24} P_t^{i.DR} \lambda_t \Delta t,$$

$$C^{i.G} = \Sigma_{t=1}^{T=24} F_t^{i.CHP} \lambda_t^F \Delta t,$$

and

$$C^{i.IL} = k * Price^{i.E} E^{i.YIL} + k * Price^{i.P} P^{i.YIL};$$

wherein $C^{i.DR}$ is an electricity purchase cost of an energy storage resource surplus user i; $C^{i.G}$ is a gas purchase cost of the energy storage resource surplus user i; $C^{i.M}$ is a device maintenance cost of the energy storage resource surplus user i; and $C^{i.IL}$ is a revenue that the energy storage resource surplus user i may receive after submitting idle energy storage resources;
constraints are as follows:

$$0 \le P_t^{i.CH} \le X_t^{i.ST}\left(P_{max}^{i.SG} - P^{i.YIL}\right),$$

$$0 \le P_t^{i.DCH} \le \left(1 - X_t^{i.ST}\right)\left(P_{max}^{i.SG} - P^{i.YIL}\right),$$

$$\eta^{ST}\Sigma_{t=1}^{T=24} P_t^{i.CH}\Delta t - \frac{1}{\eta^{ST}}\Sigma_{t=1}^{T=24} P_t^{i.DCH}\Delta t = 0,$$

$$0.1E_{max}^{i.SG} \leq 0.1E_{max}^{i.SG} + \eta^{ST}\Sigma_{t'=1}^{t}P_{t'}^{i.CH}\Delta t - \frac{1}{\eta^{ST}}\Sigma_{t'=1}^{t}P_{t'}^{i.DCH}\Delta t \leq 0.9E_{max}^{i.SG} - E^{i.YIL},$$

$$P_{t}^{i.load} + P_{t}^{i.CH} + P_{t}^{i.EB} = P_{t}^{i.DCH} + P_{t}^{i.PV} + P_{t}^{i.CHP} + P_{t}^{i.DR},$$

and

$$H_{t}^{i.load} = H_{t}^{i.CHP} + H_{t}^{i.EB};$$

wherein $P_{t}^{i.DR}$ is power of electricity purchased by the user i in a period of time t, which is greater than or equal to 0; $\lambda_{t}^{F}$ is a natural gas price in the period of time t; k is a coefficient of an acquisition price of the cloud energy storage resource; Pr$ice^{i.E}$ and Pr$ice^{i.P}$ are estimated values of the price of the cloud energy storage resource by the user i; and $E^{i.YIL}$ and $P^{i.YIL}$ are the amount of idle energy storage resources to be submitted to a cloud energy storage platform by the user i; and

a model expression of the amount of idle energy storage resources is as follows:

$$\begin{cases} P^{i.IL} = P^{i.YIL*} \\ E^{i.IL} = E^{i.YIL*} \end{cases}$$

8. The method for controlling charging and discharging of the distributed energy storage device according to claim 1, wherein

a model expression of the minimum comprehensive daily energy cost of the user for energy storage resource demand is as follows:

$$\min C^{j.DR} + C^{j.G} + C^{j.M} + C^{j.ST},$$

$$C^{j.DR} = \Sigma_{t=1}^{T=24} P_{t}^{j.DR}\lambda_{t}\Delta t,$$

$$C^{j.G} = \Sigma_{t=1}^{T=24} F_{t}^{j.CHP}\lambda_{t}^{F}\Delta t,$$

and

$$C^{j.ST} = k * Price^{E}E^{j.YDM} + k * Price^{P}P^{j.YDM};$$

wherein $C^{j.DR}$ is an electricity purchase cost of an energy storage resource demand user j; $C^{j.G}$ is a gas purchase cost of the energy storage resource demand user j; $C^{j.M}$ is a device maintenance cost of the energy storage resource demand user j; and $C^{j.IL}$ is a revenue that the energy storage resource demand user j receives after submitting idle energy storage resources;

constraints are as follows:

$$0 \leq P_{t}^{j.YCH} \leq X_{t}^{j.YST}P^{j.YDM},$$

$$0 \leq P_{t}^{j.YDCH} \leq \left(1 - X_{t}^{j.YST}\right)P^{j.YDM},$$

$$\eta^{ST}\Sigma_{t=1}^{T=24}P_t^{j.YCH}\Delta t - \frac{1}{\eta^{ST}}\Sigma_{t=1}^{T=24}P_t^{j.YDCH}\Delta t = 0,$$

$$0 \le \eta^{ST}\Sigma_{t'=1}^{t}P_{t'}^{j.YCH}\Delta t - \frac{1}{\eta^{ST}}\Sigma_{t'=1}^{t}P_{t'}^{j.YDCH}\Delta t \le E^{j.YDM},$$

$$P_t^{j.load} + P_t^{j.CH} + P_t^{j.YCH} + P_t^{j.EB} = P_t^{j.DCH} + P_t^{j.YDCH} + P_t^{j.PV} + P_t^{j.CHP} + P_t^{j.DR},$$

and

$$H_t^{j.load} = H_t^{j.CHP} + H_t^{j.EB};$$

wherein $P_t^{j.DR}$ is power of electricity purchased by the user j in a period of time t, which is greater than or equal to 0; $\lambda_t^F$ is a natural gas price in the period of time t; k is a coefficient of an acquisition price of the cloud energy storage resource; P*rice*$^{j.E}$ and P*rice*$^{j.P}$ are estimated values of the price of the cloud energy storage resource by the user j; and $E^{j.YIL}$ and $P^{j.YIL}$ are the amount of idle energy storage resources to be submitted to a cloud energy storage platform by the user j; and
a model expression of the cloud energy storage resource demand is as follows:

$$\begin{cases} P^{j.DM} = P^{j.YDM*} \\ E^{j.DM} = E^{j.YDM*} \end{cases}$$

9. The method for controlling charging and discharging of the distributed energy storage device according to claim 1, wherein matching the amount of idle energy storage resources with the cloud energy storage resource demand to obtain the actual charging and discharging power of the distributed energy storage device comprises:

establishing an actual charging and discharging power model of the distributed energy storage device of the energy storage resource surplus user; and
solving the actual charging and discharging power model of the distributed energy storage device to obtain the actual charging and discharging power of the distributed energy storage device;
wherein an expression of the actual charging and discharging power model of the distributed energy storage device is as follows:

$$P_t^{i.CH'} = \left(P_t^{i.CH*} - P_t^{i.DCH*} + P_t^{PF-i.CH} - P_t^{PF-i.DCH}\right)^+,$$

and

$$P_t^{i.DCH'} = \left(P_t^{i.CH*} - P_t^{i.DCH*} + P_t^{PF-i.CH} - P_t^{PF-i.DCH}\right)^-;$$

wherein $P_t^{i.CH*}$ and $P_t^{i.DCH*}$ are an optimal charging strategy of an energy storage resource surplus user i and an optimal discharging strategy of the energy storage resource surplus user i, respectively, and operations of $(\cdot)^+$ and $(\cdot)^-$ are expressed as follows:

$$\begin{cases} (x)^+ = \begin{cases} x, x \ge 0 \\ 0. x < 0 \end{cases} \\ (x)^- = \begin{cases} -x, x \le 0 \\ 0. x > 0 \end{cases} \end{cases}$$

10. A system for controlling charging and discharging of a distributed energy storage device, comprising:

a supply and demand resource quantization module configured to quantize supply and demand resources of the distributed energy storage device, supply and demand resources of a distributed photovoltaic device, supply and demand resources of a distributed combined heat and power device, and supply and demand resources of a distributed boiler to obtain a quantitative result of supply and demand resources of distributed energy storage;

an idle energy storage resource amount acquisition module configured to acquire an amount of idle energy storage resources submitted by an energy storage resource surplus user, wherein the amount of idle energy storage resources is calculated by the energy storage resource surplus user with a goal of minimizing a comprehensive daily energy cost on an actual operating day and according to the quantitative result of supply and demand resources of distributed energy storage;

an information pushing module configured to push a price of a cloud energy storage resource on the actual operating day to a user;

a cloud energy storage resource demand acquisition module configured to acquire cloud energy storage resource demand submitted by the user; wherein the cloud energy storage resource demand is calculated by the user with a goal of minimizing a comprehensive daily energy cost on the actual operating day and according to the price of the cloud energy storage resource, the quantitative result of supply and demand resources of distributed energy storage, and demand of the user; and

a matching module configured to match the amount of idle energy storage resources with the cloud energy storage resource demand to obtain actual charging and discharging power of the distributed energy storage device.

11. An electronic device, comprising:

at least one processor; and
a memory configured to store at least one program;
wherein the at least one program, when executed by the at least one processor, causes the at least one processor to perform the method for controlling charging and discharging of the distributed energy storage device according to any one of claims 1 to 9.

12. A computer-readable storage medium, which is configured to store computer programs that, when executed by a processor, perform the method for controlling charging and discharging of the distributed energy storage device according to any one of claims 1 to 9.

**FIG. 1**

**FIG. 2**

**FIG. 3**

**FIG. 4**

Quantify supply and demand resources of a distributed energy storage device, supply and demand resources of a distributed photovoltaic device, supply and demand resources of a distributed combined heat and power device, and supply and demand resources of a distributed boiler to obtain a quantitative result of supply and demand resources of distributed energy storage ⟋ S1

Acquire the amount of idle energy storage resources submitted by an energy storage resource surplus user ⟋ S2

Push the price of a cloud energy storage resource on an actual operating day to a user and acquire cloud energy storage resource demand submitted by the user ⟋ S3

Match the amount of idle energy storage resources with the cloud energy storage resource demand to obtain actual charging and discharging power of the distributed energy storage device ⟋ S4

**FIG. 5**

**FIG. 6**

## INTERNATIONAL SEARCH REPORT

| International application No. |
| --- |
| **PCT/CN2023/126637** |

**A. CLASSIFICATION OF SUBJECT MATTER**

H02J 3/28(2006.01)i; H02J 3/38(2006.01)i; H02J 3/46(2006.01)i; H02J 3/00(2006.01)i; H02J 13/00(2006.01)i; G06Q 10/06(2023.01)i; G06Q 30/02(2023.01)i; G06Q 50/06(2024.01)i

According to International Patent Classification (IPC) or to both national classification and IPC

**B. FIELDS SEARCHED**

Minimum documentation searched (classification system followed by classification symbols)

IPC: H02J 3/-, H02J 13/-, G06Q 10/-, G06Q 50/-

Documentation searched other than minimum documentation to the extent that such documents are included in the fields searched

Electronic data base consulted during the international search (name of data base and, where practicable, search terms used)

CNTXT, ENTXTC, ENTXT, DWPI, WPABS, CNKI, IEEE: 分布式, 储能, 发电, 风, 光, 云, 成本, 闲置, 充放电, distribut+, energy storage, generat+, wind, photovoltaic, cloud, cost, idle, discharg+, charg+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115954903 A (ECONOMIC AND TECHNOLOGICAL RESEARCH INSTITUTE, STATE GRID SICHUAN ELECTRIC POWER CO., LTD.) 11 April 2023 (2023-04-11) claims 1-10 | 1-12 |
| Y | CN 112016824 A (ECONOMIC AND TECHNOLOGICAL RESEARCH INSTITUTE, STATE GRID SICHUAN ELECTRIC POWER CO., LTD.) 01 December 2020 (2020-12-01) description, paragraphs [0004]-[0201], and figures 1-5 | 1-12 |
| Y | CN 112288242 A (ECONOMIC AND TECHNOLOGICAL RESEARCH INSTITUTE, STATE GRID SICHUAN ELECTRIC POWER CO., LTD.) 29 January 2021 (2021-01-29) description, paragraphs [0005]-[0205], and figures 1-5 | 1-12 |
| A | CN 113224758 A (SHANGHAI MAKESENS ENERGY STORAGE TECHNOLOGY CO., LTD.) 06 August 2021 (2021-08-06) entire document | 1-12 |
| A | CN 115170343 A (NANJING POWER SUPPLY BRANCH COMPANY STATE GRID JIANGSU ELECTRIC POWER COMPANY et al.) 11 October 2022 (2022-10-11) entire document | 1-12 |

☑ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **16 January 2024** | **22 January 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/126637**

### C. DOCUMENTS CONSIDERED TO BE RELEVANT

| Category* | Citation of document, with indication, where appropriate, of the relevant passages | Relevant to claim No. |
|---|---|---|
| A | KR 20200081114 A (KOREA SOUTH-EAST POWER CO., LTD. et al.) 07 July 2020 (2020-07-07)<br>entire document | 1-12 |
| A | KR 20220088067 A (KOREA ELECTROTECHNOLOGY RESEARCH INSTITUTE) 27 June 2022 (2022-06-27)<br>entire document | 1-12 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 115954903 | A | 11 April 2023 | None | | | |
| CN | 112016824 | A | 01 December 2020 | None | | | |
| CN | 112288242 | A | 29 January 2021 | None | | | |
| CN | 113224758 | A | 06 August 2021 | None | | | |
| CN | 115170343 | A | 11 October 2022 | None | | | |
| KR | 20200081114 | A | 07 July 2020 | KR | 102276949 | B1 | 13 July 2021 |
| KR | 20220088067 | A | 27 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211333948X